**Europäisches Patentamt**

**European Patent Office**

**Office européen des brevets**

(19)

(11) Veröffentlichungsnummer: **0 241 635**
**B1**

(12) ## EUROPÄISCHE PATENTSCHRIFT

(45) Veröffentlichungstag der Patentschrift:
13.06.90

(51) Int. Cl.⁵: **B09B 3/00, B03B 9/04**

(21) Anmeldenummer: **87100238.2**

(22) Anmeldetag: **10.01.87**

(54) **Verfahren und Vorrichtung zur Schlackenaufbereitung.**

(30) Priorität: **12.04.86 DE 3612399**

(43) Veröffentlichungstag der Anmeldung:
**21.10.87 Patentblatt 87/43**

(45) Bekanntmachung des Hinweises auf die Patenterteilung:
**13.06.90 Patentblatt 90/24**

(84) Benannte Vertragsstaaten:
**AT BE CH DE ES FR GB GR IT LI LU NL SE**

(56) Entgegenhaltungen:
**EP-A- 0 144 535**
**DE-A- 2 423 891**
**DE-A- 2 449 406**
**DE-B- 1 203 194**
**DE-C- 3 223 689**

(73) Patentinhaber: **Weyrich, Friedrich, Wienkamp 22,
D-4272 Kirchhellen(DE)**

(72) Erfinder: **Weyrich, Friedrich, Wienkamp 22,
D-4272 Kirchhellen(DE)**

(74) Vertreter: **Schulte, Jörg, Dipl.-Ing., Hauptstrasse 2,
D-4300 Essen-Kettwig(DE)**

**Beschreibung**

Die Erfindung betrifft ein Verfahren zur Aufbereitung der, in Müllverbrennungsanlagen anfallenden Schlacke, die zusätzlich zum bei der Verbrennung freigesetzten und abgefilterten Staub anfällt und getrennt in einem Wasserbad abgeschreckt und dann von Metallteilen befreit und abgelagert wird, wobei sie aufgrund des Ausgangsbrennmaterials eine die Sonderablagerung erfordernde Schadstoffmenge enthält. Die Erfindung betrifft außerdem eine Vorrichtung zur Aufbereitung von Müllverbrennungsschlacke und damit zur Durchführung des Verfahrens mit Klassiersieben und einem Magnetscheider sowie einem nachgeschalteten Förderband.

In Müllverbrennungsanlagen anfallende Schlacke beinhaltet je nach Ausgangsmaterial Schadstoffe, die eine Verwendung im Straßenbau oder zu ähnlichen Nutzzwecken unmöglich macht. Wegen der Veränderungen im Ausgangsmaterial ist man beispielsweise im Bundesland Hessen dazu übergegangen eine Ablagerung nur auf Sonderdeponien zuzulassen. Dafür werden erhebliche Auflagen gemacht, wobei auch andere Bundesländer diese Sondervorschriften für die Ablagerung von Müllverbrennungsschlacke übernehmen wollen. Damit wird der Aufwand für die Entsorgung der Müllverbrennungsanlagen wesentlich erhöht und das gesamte Müllverbrennungsverfahren erheblich belastet. Grund hierfür ist, daß die in den Schlacken der Müllverbrennungsanlagen enthaltenen schädlichen Stoffe durch das Oberflächenwasser abgelöst und abgewaschen werden können, so daß sie in das Grundwasser gelangen, wo sie die Trinkwasser- und Nutzwassergewinnung belasten oder gar unmöglich machen. Zur Ermittlung dieser Ablösungen und Abwaschungen werden sogenannte Eluat-Untersuchungen vorgenommen, die im Falle der Müllverbrennungsschlacke gezeigt haben, daß beispielsweise die Werte für die Leitfähigkeit, für Blei, Antimon sowie den CSB-Wert überschritten werden. Dabei muß man davon ausgehen, daß in Zukunft die als zulässig angesehenen Werte auch für Nitrat Nitrit, Sulfat, Phosphat, Chlorid, Calzium, Magnesium, Eisen, Arsen, Cadmium, Kupfer, Nickel, Chrom, Zink u.a. weiter zurückgenommen werden.

Da die Menge der in Müllverbrennungsanlagen anfallenden Schlacke noch zunimmt, aber bereits jetzt die 5 Millionen Jahrestonnen-Grenze erreicht hat, ist es problematisch, allein schon für diese riesigen Mengen Sonderdeponien zur Verfügung zu stellen, ganz davon abgesehen, daß damit eine erhebliche Kostenlawine verursacht würde. Bei der Verbrennung des Mülls werden die anfallenden Stäube abgesaugt und in Filtern oder in einer Rauchgaswäsche abgefangen und anschließend abgelagert. Wegen der Feinkörnigkeit dieses Staubes ist es zweckmäßig, ihn unabhängig von der Schlacke zu behandeln, zu transportieren und abzulagern.

Der Erfindung liegt die Aufgabe zugrunde, die in Müllverbrennungsanlagen anfallende Schlacke möglichst einer wirtschaftlichen Verwertung zuzuführen und den nur auf Sondermülldeponien ablagerbaren Anteil möglichst klein zu halten.

Die Aufgabe wird erfindungsgemäß dadurch gelöst, daß die Schlacke nach der Magnetabscheidung getrocknet und dabei fortlaufend durchmengt und bewegt, dann bei 0,5 bis 1 mm, vorzugsweise 0,8 mm klassiert und dann nur die grobe Komponente Nutzzwecke zugeführt wird, während die feine Komponente endgültig abgelagert wird.

Mit Hilfe eines derartigen Verfahrens ist es überraschend möglich, eine relativ große Menge der Schlacke einer wirtschaftlichen Verwertung zuzuführen, während der auf Sondermülldeponien abzulagernde Anteil klein ist. Etwa 3/4 der Schlacke kann so der wirtschaftlichen Nutzung zugeführt werden und gemäß einer zweckmäßigen Weiterbildung als Zuschlagstoff für den Straßen- und Wegebau oder für Aschebeton verwendet werden. Vorteilhaft ist dabei nicht nur die Entlastung der Schlackenentsorgung bzw. der gesamten Müllverbrennung, sondern auch die Tatsache, daß durch den Einsatz des weitaus größten Teils der Schlacke für Verfestigungsmaßnahmen, Straßenbauzwecke usw. natürliche Lagerstätten geschont werden können, so daß gleichzeitig ein erheblicher Beitrag zum Umweltschutz erbracht wird. Dies ist dadurch möglich, daß der Anteil an Schlacke, aus dem die Schadstoffe in gefährlichem Maße ausgewaschen werden können, durch den gewählten Trennschnitt separiert werden. Dabei werden alle diese Komponenten dadurch separiert, daß durch die gezielte Behandlung des Materials bei der Trocknung ein entsprechend genau zu klassierendes Material zur Verfügung steht. Während des Trockenvorganges wird die Schlacke nämlich so beansprucht, daß auch angebackenes Feinmaterial abgelöst wird, so daß nach dem anschließenden Klassieren in der groben Komponente wirklich nur solches Material vorhanden ist, das einer Auslaugung den notwendigen Widerstand entgegensetzt.

Nach einer weiteren zweckmäßigen Ausbildung wird der Anteil über 0,8 mm weiter bei 2 bis 3 mm, vorzugsweise 2,6 mm klassiert und das Korn 0,8 bis 2,6 mm in Tüten verpackt und als Streumittel im Winter verwendet, während die Komponente über 2,6 mm für die weiter oben schon erwähnten Zwecke vorgesehen ist. Auch dies stellt eine umweltfreundliche Verwendung dar, da die Schlacke im Winter Straßen und Wege wie gewünscht sicher macht, andererseits aber später wieder zurückgewonnen und entweder noch einmal verwendet oder abgelagert werden kann, während die das Auftauen bewirkenden Streumittel die Umwelt bleibend und zumindest für längere Zeit belasten. Als Streugut eignet sich die Komponente zwischen 0,8 und 2,6 mm auch deshalb besonders gut, weil es sich um ein recht scharfkantiges Material handelt, das sich im Schnee und auf dem Eis so festsetzt, daß das Streumittel auch unter ungünstigsten Umständen seine Funktion voll erfüllen kann.

Nach wie vor muß der feinkörnige Anteil in den Müllverbrennungsanlagen anfallenden Schlacke auf Sondermülldeponien abgelagert werden. Um auch dies zu vermeiden und statt dessen einer Ablagerung auf normalen Deponien zu ermöglichen, wird gemäß der vorliegenden Erfindung vorgesehen, daß der feinkörnige Anteil 0 bis 0,5 (l,0) mm mit einem die Ablösung und Auswaschung schädlicher Stoffe erschwerenden bzw. behindernden Material gemischt und dann bleibend abgelagert wird. Hierzu eignet sich beispielsweise Zement aber auch andere Materialien oder gar Abfallprodukte, die zusammen mit der feinkörnigen Schlacke eine so innige Verbindung eingehen, daß Auswaschungen nicht möglich sind. Dazu zählt beispielsweise sogenannter Rotschlamm. Vorteilhaft dabei ist, daß ein solches Gemisch auf normale Deponien verbracht werden kann, also einen wesentlich geringeren Kostenfaktor darstellt. Der feinkörnige Anteil liegt bei einem Trennschnitt bei 0,8 mm (l,0 mm) bei 20 bis 25 % der Gesamtmenge der in Müllverbrennungsanlagen anfallenden Schlacke. Damit macht sich eine entsprechende preiswertere Ablagerung dieses Anteiles ebenfalls deutlich bemerkbar.

Um den Feinkornanteil möglichst vollständig vom groben Anteil trennen zu können, ist erfindungsgemäß vorgesehen, daß die Schlacke auf l % Restfeuchte getrocknet wird. Eine solche Trocknung ermöglicht es bei der entsprechenden gezielten Behandlung der Schlacke im Trockner bzw. während des Trocknungsvorganges, alle feinen Bestandteile der Schlacke so zu separieren, daß diese bei der Klassierung anschließend getrennt anfallen und dann wie erwähnt weiterbehandelt werden, während die grobe Komponente wirtschaftlichen Einsatzzwecken zugeführt wird.

Die feinkörnigen Partikel der Schlacke können vorteilhaft separiert werden, wenn sie weiter schonend bei l00° C getrocknet werden. Dann erfolgt beim Transport bereits die gewünschte Trennung, weil die feinkörnigen Schlackepartikel schneller trocknen, als die groben Partikel. Besonders vorteilhaft ist es, die Schlacke bei l00° C über 0,5 bis 2 Stunden, vorzugsweise l Stunde zu trocknen. Es zeigt sich, daß bei l Stunde Trocknungsvorgang eine ausreichend klare Klassierung möglich ist, auch wenn der Trocknungsvorgang danach nicht unbedingt l00 %ig abgeschlossen sein muß. Es reicht aber, wenn, wie weiter oben bereits erwähnt, die insbesondere an den größeren Partikeln anhaftenden feinkörnigen Partikel im Rahmen der vorgesehenen einstündigen Trocknung so weit abtrocknen, daß sie anschließend sicher zu trennen bzw. hereinzugewinnen sind.

Zur Durchführung des Verfahrens dient eine Vorrichtung, bei der zwischen Magnetscheider und Förderband ein aktiver Rohrtrockner mit nachgeschaltetem Klassiersieb angeordnet ist und bei dem Siebüberlauf ein zweites Förderband nachgeordnet ist, so daß er abgebunkert oder gleich der weiteren Verwendung zugeführt werden kann, während der Siebdurchgang zur Sonderdeponie oder wie weiter vorne geschildert nach entsprechender Abkapselung auf normale Deponien verbracht wird. Während bisher bei derartigen Anlagen das Klassiersieb vor dem Magnetabscheider im wesentlichen dazu eingesetzt worden ist, besonders grobe Bestandteile auszuhalten, wird nun dem Magnetscheider ein Rohrtrockner und dann ein zusätzliches Klassiersieb nachgeordnet, über die die gezielte Behandlung der an sich feucht anfallenden Schlacke möglich ist. Die gezielte Behandlung erfolgt dabei im Rohrtrockner insofern, als hier die Schlacke intensiv durchmengt und ggf. sogar geschüttelt wird, um bei dem nachgeordneten Klassiersieb dann auch wirklich einen möglichst genauen Trennschnitt zu ermöglichen. Mit dem Begriff genauer Trennschnitt ist gemeint, daß der Siebüberlauf ein festes, keine Anbackungen u.ä. mehr aufweisendes Korn enthalten soll. Ein solches Korn setzt einer evtl. Auslaugung den notwendigen Widerstand entgegen und kann von daher für alle möglichen wirtschaftlichen Zwecke ohne Gefahr eingesetzt werden.

Die notwendige Durchmengung des im Rohrtrockner befindlichen Schlackenmaterials wird erfindungsgemäß dadurch gesichert, daß der Rohrtrockner im Abstand angeordnete, von der Innenwand in Richtung Achse vorstehende Mitnehmerbleche oder eine offene Schnecke aufweist. Über die Mitnehmerbleche bzw. die Schnecke wird das Material jeweils bei der Umdrehung des Rohrtrockners angehoben und fällt dann auf die Innenwand herab bzw. auf die Schlackenschicht, so daß während des Durchgangs durch den Rohrtrockner die vollständige Abtrocknung des Materials und auch bereits die Ablösung des Feinkorns erreicht wird.

Nach einer weiteren zweckmäßigen Ausbildung weist das Klassiersieb einen auswechselbaren Siebboden auf, so daß bei der gemäß dem erfindungsgemäßen Verfahren notwendig werdenden Anpassung nur ein neuer Siebboden eingeschoben werden muß, um die Klassiergrenze herauf- oder herabzusetzen. Zur Verringerung der Trocknungszeit und um den Klassiervorgang insgesamt zu verbessern, ist nach einer weiteren Ausbildung vorgesehen, daß die Siebböden des Klassiersiebes beheizbar ausgebildet sind. Dadurch wird die Schlacke auch während des Klassiervorganges auf einer bestimmten Temperatur gehalten und das Bilden von Anbackungen verhindert, so daß die Klassierung schnell und einwandfrei durchgeführt werden kann.

Die Erfindung zeichnet sich insbesondere dadurch aus, daß mit Hilfe des erfindungsgemäßen Verfahrens der weitaus größte Teil der in Müllverbrennungsanlagen anfallenden Schlacke nicht auf Sondermülldeponien verbracht werden muß, sondern vielmehr einer mehr oder weniger wirtschaftlichen Nutzung zugeführt werden kann. Dadurch, daß die hohen Kosten für die Sondermülldeponie entfallen, ergibt sich ein viel breiteres Verwendungsspektrum für die entsprechend grobe Komponente der Schlacke. Darüber hinaus ist es auch möglich, den feinkörnigen und gemäß Eluat-Untersuchungen gefährlichen Anteil so zu verändern bzw. zu formen, daß er durchaus auf normalen Deponien abgelagert werden kann, wodurch ebenfalls eine Kostensenkung in deutlicher Höhe erreicht wird. Die erfindungsgemäße Vorrichtung zeichnet sich dadurch aus, daß sie ohne großen mechanischen und regeltechnischen Aufwand eine verfahrensgemäße Behandlung der Schlacke sicherstellt.

Durch die besondere Ausbildung des Trockners ist vor allem eine vollständige und genaue Separierung des die Umwelt gefährdenden Anteils der Schlacke möglich.

Die vorliegende Erfindung wird nachfolgend anhand von Beispielen erläutert. Darüber hinaus sind zur Erläuterung der erfindungsgemäßen Vorrichtung Ausführungsbeispiele in den Figuren enthalten.

Beispiel I

| Fraktionen: | < 0,5 mm | 0,5–1,25 mm | 1,25–5 mm | > 5 mm |
|---|---|---|---|---|
| Leitfähigkeit bei 25 C (uS/cm) | 4420 | 2950 | 1200 | 673 |
| pH-Wert | 12,05 | 12,00 | 11,35 | 9,55 |
| Nitrat (mg/l) | 1,2 | < 1 | < 1 | < 1 |
| Nitrit (mg/l) | 0,48 | 0,18 | 0,11 | 0,09 |
| Sulfat (mg/l) | 1020 | 203 | 166 | 162 |
| Phosphat ber. als PO4 (mg/l) | 0,9 | 0,5 | 0,3 | 0,2 |
| Chlorid (mg/l) | 48 | 32 | 9 | 7 |
| Calzium (mg/l) | 387 | 224 | 89,4 | 18,1 |
| Magnesium (mg/l) | < 0,1 | < 0,1 | < 0,1 | 0,6 |
| Eisen, gesamt (mg/l) | 0,31 | 0,44 | 0,60 | 0,50 |
| CSB (mg/l 02) | 105 | 50 | 33 | 45 |
| Arsen (mg/l) | 0,0024 | 0,0020 | 0,0014 | 0,0011 |
| Blei (mg/l) | 0,16 | 0,14 | 0,041 | 0,0039 |
| Cadmium (mg/l) | < 0,0004 | < 0,0004 | < 0,0004 | < 0,0004 |
| Kupfer (mg/l) | 0,30 | 0,077 | 0,053 | 0,031 |
| Nickel (mg/l) | 0,007 | < 0,005 | < 0,005 | < 0,005 |
| Chrom (mg/l) | 0,069 | 0,039 | 0,016 | 0,019 |
| Zink (mg/l) | 0,42 | 0,062 | 0,017 | < 0,01 |
| Natrium (mg/l) | 47,4 | 22,4 | 10,4 | 11,4 |
| Kalium (mg/l) | 52,2 | 24,8 | 19,9 | 27,4 |
| Cyanid, gesamt (mg/l) | 0,02 | < 0,01 | < 0,01 | < 0,01 |

| | | |
|---|---|---|
| Trockenzeit | 2 Std. | bei 100°C |
| Aufgabematerial | 300 g | naß |
| | 260 g | trocken |
| entsprechend | 13,2% | Feuchtigkeitsgehalt |

Siebanalyse

| | | |
|---|---|---|
| größer | 10 mm | 10,9% |
| größer | 5 mm | 22,6% |
| größer | 2 mm | 24,4% |
| größer | 1,25 mm | 9,6% |
| größer | 1,0 mm | 2,5% |
| größer | 0,5 mm | 11,6% |
| größer | 0,125 mm | 11,8% |
| kleiner | 0,125 mm | 6,6% |

Beispiel II

| Elemente | Richtwerte | normale Müllasche | entstaubte Müllasche |
|---|---|---|---|
| 1. Leitfähigkeit | < 1.000 µS/cm | 2.360 µS/cm | 1.010 (1.000) µS/cm |
| 2. pH-Wert | 5,5–10 | 12,00 | 10,70 (10) |
| 3. Nitrat | 50 mg/l | < 1 mg/l | < 1 mg/l |
| 4. Nitrit | 1 mg/l | 0,09 mg/l | 0,33 mg/l |
| 5. Sulfat | 250 mg/l | 187 mg/l | 370 (250) mg/l |
| 6. Phosphat P 04 | 1 mg/l | 0,6 mg/l | < 0,01 mg/l |
| 7. Chlorid | 200 mg/l | 268 mg/l | 10,3 mg/l |
| 8. Calzium | keine Richtwerte | 269 mg/l | 189 mg/l |
| 9. Magnesium | keine Richtwerte | < 0,1 mg/l | 0,29 mg/l |
| 10. CSB | 20 mg $O_2$/l | 32 mg/l | 20 mg/l |
| 11. Arsen | 0,05 mg/l | 0,0005 mg/l | < 0,0004 mg/l |
| 12. Blei | 0,05 mg/l | 0,56 mg/l | < 0,001 mg/l |
| 13. Cadmium | 0,005 mg/l | < 0,0004 mg/l | < 0,0004 mg/l |
| 14. Kupfer | 0,1 mg/l | 0,15 mg/l | 0,063 mg/l |
| 15. Nickel | 0,05 mg/l | < 0,005 mg/l | < 0,005 mg/l |
| 16. Chrom gesamt | 0,05 mg/l | 0,009 mg/l | 0,007 mg/l |
| 17. Zink | 1 mg/l | 0,36 mg/l | 0,026 mg/l |
| 18. Natrium | keine Richtwerte | 25,1 mg/l | 26,3 mg/l |
| 19. Kalium | keine Richtwerte | 30,3 mg/l | 32,9 mg/l |
| 20. Cyanid, gesamt | 0,05 mg/l | < 0,01 mg/l | < 0,01 mg/l |

Siebanalyse

| | |
|---|---|
| 0,8mm–10 mm | 80–70% |
| 0 mm–0,8 mm | 20–30% |

Die von der Müllverbrennungsanlage kommende Schlacke wird über das Zuführband (I) herangeführt und zunächst über den Magnetscheider (2) geleitet. Hier werden die Metallteile abgeschieden und dem Metallsammler (3) zugeführt.

Die dann von Metallteilen gereinigte Schlacke wird nach dem Stand der Technik über das Förderband (4) in Container (5) verladen und von dort aus den Sonderdeponien zugeführt. Wie die Figur verdeutlicht, ist hier zwischen dem Magnetscheider (2) und dem Förderband (4) noch ein Rohrtrockner (6) und ein Klassiersieb (7) angeordnet, über die eine besondere Behandlung der MV-Asche vorgenommen wird. Der Siebboden (8) des Klassiersiebes (7) ist auswechselbar, so daß je nach Gegebenheiten, d.h. Wirkungsgrad der Verbrennung und Ausgangsmaterial oder auch unter Berücksichtigung beider Größen eine Anpassung der Klassiergrenze vorgenommen werden kann.

Der Siebdurchgang ( 9) wird wie bisher über das Förderband (4) in den Container (5) geladen und von diesem Sonderdeponien zugeführt. Durch eine Abdeckung (I4) ist dabei sichergestellt, daß das ja sehr feinkörnige Material beim Abtransport nicht verweht werden kann.

Der Siebüberlauf (I0) wird dem Förderband (II) übergeben und von diesem in die Bunker (I2, I3) verteilt, um von dort unterschiedlichen Nutzungszwecken zugeführt zu werden. Hier ist es möglich, auch weitere Siebstationen, also Klassierungen vorzusehen, über die eine Anpassung an die Forderung der jeweiligen Nutzung ohne großen Aufwand möglich ist.

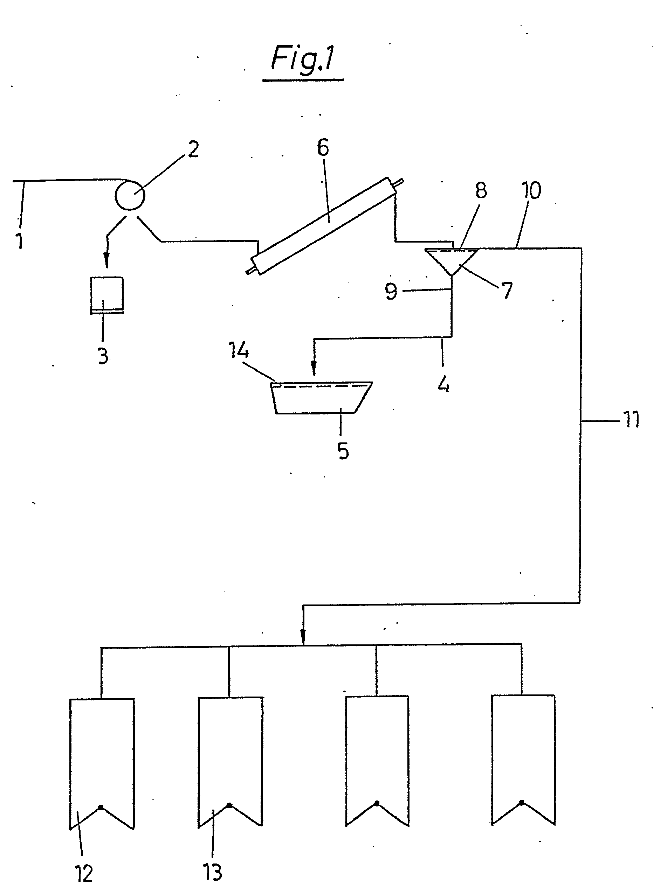

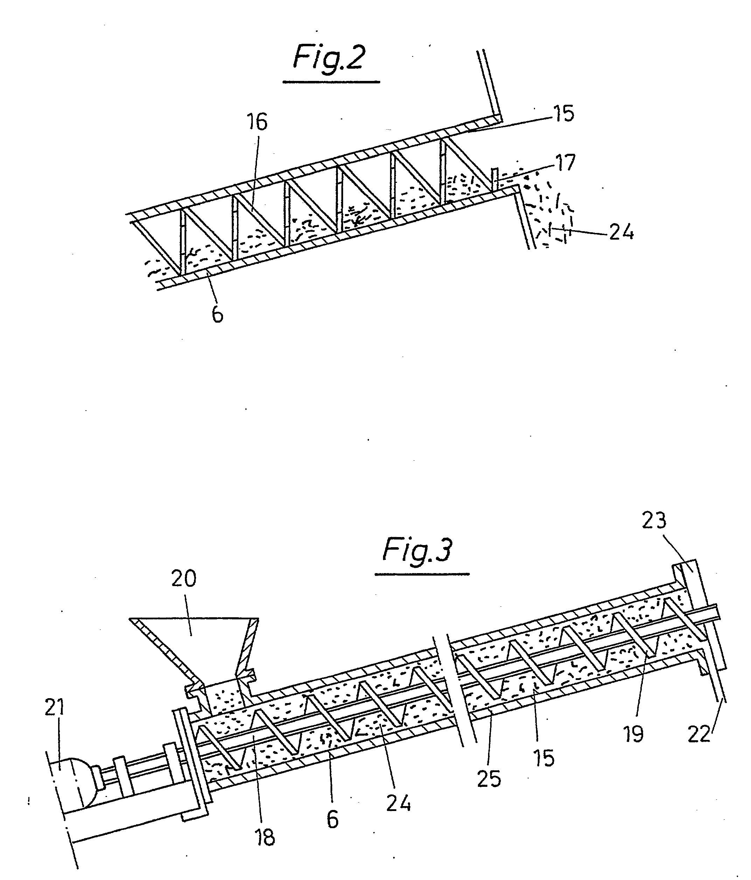

Die Fig. 2 und 3 zeigen besondere Ausbildungen des Rohrtrockners (6). Nach Fig. 2 ist auf der Innenwand (I5) ein durchgehendes Mitnehmerblech (I6, I7) vorgesehen, über das die Schlacke (24) kontinuierlich in Richtung Austrag weiterbefördert wird. Statt des durchgehenden Mitnehmerbleches (I6, I7) ist es auch denkbar, aus Einzelstücken bestehende Mitnehmerbleche vorzusehen, wobei bei beiden Ausbildungen sichergestellt ist, daß die Schlacke jeweils angehoben und dann auf die Innenwand zurückgeworfen wird, um auf diese Art und Weise die Anbackungen an der Schlacke abzulösen und ein einwandfreies Korn über 0,8 mm zu erhalten.

Fig. 3 zeigt eine Ausbildung, bei der auf einer durchgehenden Achse (I8) eine Schnecke (I9) vorgesehen ist, die für den Weitertransport und das entsprechende Durchmengen und Beanspruchen der Schlacke Sorge trägt. Über den Eintrag (2o) im Bereich des Antriebes (2I) wird die Schlacke (24) in den

EP 0 241 635 B1

Rohrtrockner (6) eingeführt und dann wie geschildert über die durchgehende Schnecke (l9) weiterbeför-dert, um im Bereich des abschließenden Abschlußdeckels (23) und den Austrag (22) auf das hier nicht dargestellte Förderband übergeben zu werden. Die geschlossene Ausbildung gemäß Fig. 3 ermöglicht es, Warmluft in den Rohrtrockner (6) einzuführen und dabei zweckmäßigerweise entgegen der Förderrichtung der Schlacke, so daß eine vorteilhafte zusätzliche Durchmischung der Schlacke auch durch die warme Luft möglich ist. Ansonsten würde sich sowohl bei der Ausbildung nach Fig. 3 wie Fig. 2 eine indirekte Trocknung anbieten, bei der die Wärme entweder durch die Achse (l8) und oder aber über die Wandung (25) zugeführt wird. Nähere Einzelheiten hierzu zeigen die beiden angezogenen Figuren allerdings der Einfachheit halber nicht.

**Patentansprüche**

l. Verfahren zur Aufbereitung der in Müllverbrennungsanlagen anfallenden Schlacke, die zusätzlich zum bei der Verbrennung freigesetzten und abgefilterten Staub anfällt und getrennt in einem Wasserbad abgeschreckt und dann von Metallteilen befreit und abgelagert wird, wobei sie aufgrund des Ausgangsbrennmaterials eine die Sonderablagerung erfordernde Schadstoffmenge enthält, dadurch gekennzeichnet, daß die Schlacke nach der Magnetabscheidung getrocknet und dabei fortlaufend durchmengt und bewegt, dann bei 0,5 bis l mm, vorzugsweise 0,8 mm klassiert und dann nur die grobe Komponente Nutzzwecken zugeführt wird, während die feine Komponente endgültig abgelagert wird.

2. Verfahren nach Anspruch l, dadurch gekennzeichnet, daß der Anteil über 0,8 mm als Zuschlagstoff für den Straßen- und Wegbau oder für Aschebeton verwendet wird.

3. Verfahren nach Anspruch l, dadurch gekennzeichnet, daß der Anteil über 0,8 mm weiter bei 2 bis 3 mm, vorzugsweise 2,6 mm klassiert und das Korn 0,8 bis 2,6 mm in Tüten verpackt und als Streumittel im Winter verwendet wird.

4. Verfahren nach Anspruch l, dadurch gekennzeichnet, daß der feinkörnige Anteil 0 bis 0,5 (l,0) mm mit einem die Ablösung und Auswaschung schädlicher Stoffe erschwerenden bzw. behindernden Material gemischt und dann bleibend abgelagert wird.

5. Verfahren nach Anspruch l, dadurch gekennzeichnet, daß die Schlacke auf l % Restfeuchte ge-trocknet wird.

6. Verfahren nach Anspruch l, dadurch gekennzeichnet, daß die Schlacke schonend bei l00° C ge-trocknet wird.

7. Verfahren nach Anspruch l, dadurch gekennzeichnet, daß die Schlacke bei l00° C über 0,5 bis 2 Stunden, vorzugsweise l Stunde getrocknet wird.

8. Vorrichtung zur Aufbereitung von Müllverbrennungsschlacke und damit zur Durchführung des Verfahrens nach den Ansprüchen l oder 2 bis 7, mit Klassiersieben und einem Magnetscheider sowie einem nachgeschalteten Förderband, dadurch gekennzeichnet, daß zwischen Magnetscheider (2) und Förderband (4) ein aktiver Rohrtrockner (6) mit nachgeschaltetem Klassiersieb (7) angeordnet ist und daß dem Siebüberlauf (l0) ein zweites Förderband (ll) nachgeordnet ist.

9. Vorrichtung nach Anspruch 8, dadurch gekennzeichnet, daß der Rohrtrockner (6) im Abstand an-geordnete, von der Innenwand (l5) in Richtung Achse (l8) vorstehende Mitnehmerbleche (l6, l7) oder ei-ne offene Schnecke (l9) aufweist.

l0. Vorrichtung nach Anspruch 8, dadurch gekennzeichnet, daß das Klassiersieb mit einem auswechselbaren Siebboden (8) ausgerüstet ist.

ll. Vorrichtung nach Anspruch 8, dadurch gekennzeichnet, daß die Siebböden (8) des Klassiersiebes (7) beheizbar ausgebildet sind.

**Claims**

1. Method for the treatment of the slag occurring in garbage incineration installations, which occurs in addition to the dust liberated and filtered away in the combustion and is separately quenched in a water bath and then freed from metal parts and deposited, this slag containing, by reason of the initial incinerated material, a quantity of harmful substance necessitating special storage, characterised in that the slag, after magnetic separation, is dried and in the drying is continuously intermixed and moved, then graded at 0.5 to 1 mm., preferably 0.8 mm, and then only the coarse component is fed to utilisation purposes, while the fine component is finally placed in store.

2. Method according to claim 1, characterised in that the proportion above 0.8 mm is used as aggregate for street and roadway construction or for ash concrete.

3. Method according to claim 1, characterised in that the proportion above 0.8 mm is further graded at 2 to 3 mm., preferably 2.6 mm, and the material in grains of 0.8 to 2.6 mm. is packed in bags and used as sprinkling agent in winter.

4. Method according to claim 1, characterised in that the fine-grained proportion of 0 to 0.5 (1.0) mm is mixed with a material which retards or prevents the liberation and washing out of harmful substances and then is placed in permanent deposit.

5. Method according to claim 1, characterised in that the slag is dried to 1% residual moisture.

6. Method according to claim 1, characterised in that the slag is dried in protected manner at 100°C.

7. Method according to claim 1, characterised in that the slag is dried at 100°C over 0.5 to 2 hours, preferably 1 hour.

8. Device for the treatment of garbage incineration slag and thus for carrying out the method according to claims 1 or 2 to 7, with grading sieves and a magnetic separator and a subsequently placed conveyor belt, characterised in that an active tube drier (6) with following grading sieve (7) is arranged between magnetic separator (2) and conveyor belt (4) and in that a second conveyor belt (11) is arranged after the sieve overflow (10).

9. Device according to claim 8, characterised in that the tube drier (6) comprises entraining plates (16, 17) arranged with spacing and protruding in the direction of the axis (18) from the inner wall (15), or an open worm (19).

10. Device according to claim 8, characterised in that the grading sieve is equipped with a replaceable sieve tray (8).

11. Device according to claim 8, characterised in that the sieve trays (8) of the grading sieve (7) are made heatable.

## Revendications

1. Procédé de traitement des scories produites dans les usines d'incinération des ordures ménagères qui se produisent additionnellement à la poussière libérée et trempée séparément dans un bain d'eau et filtrée lors de l'incinération et sont ensuite séparées des parties métalliques et déposées, et qui contiennent des quantités d'éléments polluants, du fait du matériau combustible de sortie, qui nécessitent un dépôt spécial, caractérisé en ce que les scories sont, après la séparation magnétique, séchées et à cette occasion mélangées et déplacées en continu, puis sont triées à 0,5 à 1 mm, de préférence à 0,8 mm, et ensuite seuls les composants grossiers sont envoyés à une utilisation tandis que les composants fins sont déposés définitivement.

2. Procédé selon la revendication 1, caractérisé en ce que la portion au-dessus de 0,8 mm est utilisée comme agrégats pour la construction de rues ou de routes ou pour le béton de cendres.

3. Procédé selon la revendication 1, caractérisé en ce que la portion à 0,8 mm est encore triée à 2 à 3 mm, de préférence à 2,6 mm, et les grains de 0,8 à 2,6 mm sont emballés dans des sacs et utilisés comme matière à répandre en hiver.

4. Procédé selon la revendication 1, caractérisé en ce que la portion à grains fins de 0 à 0,5 (1,0) mm est mélangée à un matériau rendant difficile la séparation et le lessivage des matériaux polluants et est ensuite déposée de manière permanente.

5. Procédé selon la revendication 1, caractérisé en ce que les scories sont séchées à une humidité résiduelle de 1%.

6. Procédé selon la revendication 1, caractérisé en ce que les scories sont séchées soigneusement à 100°C.

7. Procédé selon la revendication 1, caractérisé en ce que les scories sont séchées à 100°C pendant 0,5 à 2 heures, de préférence 1 heure.

8. Dispositif pour le traitement des scories d'usines d'incinération d'ordures ménagères et ainsi pour la mise en œuvre du procédé selon les revendications 1 ou 2 à 7, avec des cribles-classeurs à secousses et un trieur magnétique ainsi qu'une bande transporteuse intercalée en arrière, caractérisé en ce qu'un séchoir à tubes (6) actif avec crible-classeur à secousses (7) intercalé en arrière est disposé entre le trieur magnétique (2) et la bande transporteuse (4) et, une seconde bande transporteuse (11) est intercalée en arrière du refus (10) du crible.

9. Dispositif selon la revendication 8, caractérisé en ce que le séchoir à tubes (6) présente des tôles d'entraînement disposées écartées et faisant saillie de la paroi intérieure (15) dans la direction de l'axe (18) ou une vis sans fin (19) ouverte.

10. Dispositif selon la revendication 8, caractérisé en ce que le crible-classeur à secousses est équipé d'un fond perforé (8) interchangeable.

11. Dispositif selon la revendication 8, caractérisé en ce que les fonds perforés (8) du crible-classeur à secousses (7) sont constitués de manière à pouvoir être chauffés.

## Fig.1

## _Fig.2_

## _Fig.3_